# EUROPEAN PATENT APPLICATION

(11) **EP 1 221 543 A2**
(43) Date of publication of application: **10.07.2002**
(21) Application number: 01310714.9
(22) Date of filing: 20.12.2001
(51) Int. Cl.: F02B 77/04, B08B 9/00

(54) **Misted air cleaning system and related method**

(30) Priority: 05.01.2001 US 755349
(71) Applicant: GENERAL ELECTRIC COMPANY, Schenectady, NY 12345 (US)
(72) Inventor: Woodmansee, Donald Ernest, Simpsonville, South Carolina 29681 (US); Schroder, Mark, Hendersonville, North Carolina 28739 (US); Beadie, Douglas, Greenville, South Carolina 29650 (US)
(74) Representative: Pedder, James Cuthbert

(57) **Abstract**

A system (10) and related method for cleaning structures including structures (11) with interior surfaces. The system (10) includes a mixing chamber (18) for selectively combining a cleaning gas and liquid droplets together so that the droplets are entrained in the gas. The combination is directed to the structure (11) to be cleaned. The velocity of the gas combined with the density of the liquid droplets provides a washing momentum to effect removal of particulate matter from the structure (11). The system (10) also includes a condenser and a separator (33) for separating the liquid from the gas after cleaning. A filter (41) is employed to isolate and measure the quantity of particulate removed from the cooling circuit. A rotameter (44) forms part of the system (10) and is used to measure the accumulated quantity of liquid suitable for effecting a satisfactory cleaning. The system (10) and related cleaning method may be used to clean the cooling system of a rotor bucket (11).

## Description

This invention relates generally to systems and methods for cleaning turbines and more particularly to a system and a method for cleaning the contaminated surfaces of gas turbine structures.

Turbines, including gas, steam and other forms of turbomachinery, include a stator structure and a rotor structure. The stator is a fixed structure within which the rotor rotates. The stator and rotor each generally includes one or more sets of blades offset from one another and extending into an annular flow path between the stator and the rotor. In a gas turbine, for example, a set of stator compressor vanes and a set of rotor compressor blades act together to compress air entering the flow path. Fuel is mixed with the compressed air and ignited in a combustor stage. The product of combustion is a pressurized, hot gas that acts to move the turbine buckets, causing turbine rotor rotation. Spent combustion products exit the turbine as low-pressure hot gases that are often passed through boilers to produce steam. Cooling fluid is directed into internal passageways in buckets immersed in the hot combustion gases.

The cooling fluid includes entrained particulate matter. That particulate matter may include, among other materials, iron oxide or other metallic and organic particles. The entrained particulate matter tends to accumulate in high centrifugal force areas of the turbine buckets. Accumulation is particularly significant within the corners of the bucket's passageways. Extensive accumulation can adversely impact turbine component life by either insulating the structure from needed cooling or by plugging small holes used for jet cooling of structures.

The problem of particulate accumulation in critical areas of a turbine is not new. For that reason, scheduled maintenance activities include manual removal of particulate from the interior passageways of the turbine buckets. That must be accomplished by disassembling the engine, including the turbine buckets, and physically dislodging the particulate. However, when accumulation is great enough to affect turbine operation the removal must occur prior to regularly scheduled maintenance. Disassembly of the turbine engine prior to scheduled maintenance is not desirable.

An alternative process for cleaning the bucket's passageways includes forcing a chemical cleaning solution through the passageways. Getting a sufficient flow of a single-phase liquid cleaning solution near the walls may require very high inlet pressures. Moreover, if a gas (such as air) is casually admitted to the system, locally high pressures can be created by "slug" flows. This can also happen if the solution discharge is suddenly closed, thereby creating water hammer. This can cause damage to the walls of the hot-gas path components. Further, leftover caustic cleaning solution may remain in corners of passageways and damage components of the bucket as well as adjacent structures by corrosion.

Existing systems and methods for cleaning the interior surfaces of complex structures such as turbine rotor buckets are inadequate. What is needed is a system and corresponding method for cleaning such structures with minimal disruption. What is also needed is such a system and related method that ensures substantially complete cleaning without damage to the structure itself.

The above-mentioned needs are met by the present invention, which provides a system and method for cleaning structures including turbine blades or buckets. The method includes entraining a liquid, such as water in droplet form, in a gas flow and passing that mixture over the surface of a structure to be cleaned. The water droplets are combined with the gas in a manner that produces a sheet or film of water that dislodges particulate from all surfaces, including interior corners. The energy for the cleaning comes from the high-velocity gas flow. As a result, much less water flow is needed than in single-phase (e.g., liquid) cleaning systems of the type described. The application of the sheeting liquid and gas combination may be repeated until particulate is substantially removed. The sheeting action limits the possibility of water hammer. The method does not require the use of hazardous cleaning chemicals.

The system for cleaning the structure includes a cleaning gas accumulator for retaining the cleaning gas, which may be ambient air. The system also includes flowmeters and valves to control the mass ratio of water to air, a water atomizing device, and a mixing chamber for combining the air with liquid droplets and a coupling to couple the mixing chamber to the structure. The coupling is designed to direct the combination of air and liquid droplets to one or more surfaces of the structure to be cleaned in a sheeting manner as described without requiring disassembly of the structure. The system further includes a filter for isolating and measuring the quantity of particulate removed from the structure.

The invention will now be described in greater detail, by way of example, with reference to the drawings, in which:-
Figure 1 is a simplified schematic diagram of a first embodiment of the misted cleaning system of the present invention.
Figure 2 is a cross-sectional view of a generic rotor bucket having its interior regions (cooling system) cleaned with the misted cleaning system of the present invention.
Figure 3 is a simplified schematic diagram of a second embodiment of the misted cleaning system of the present invention.

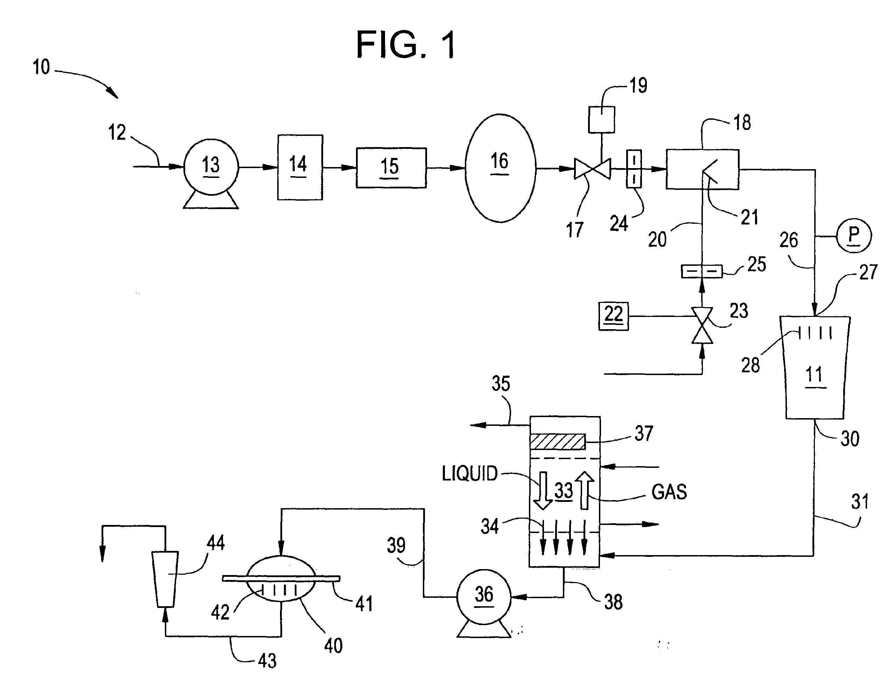

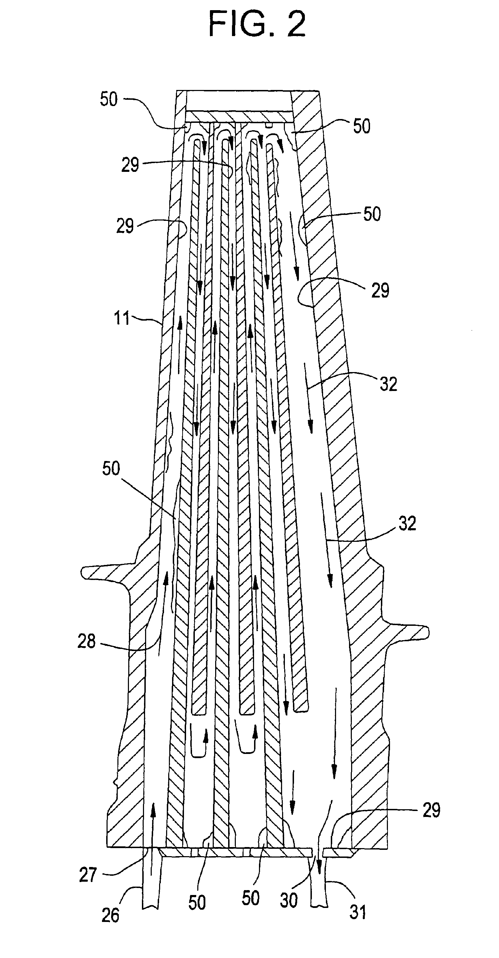

Referring to the drawings wherein identical reference numerals denote the same elements, Figure 1 illustrates a misted cleaning system 10 suitable for cleaning a structure 11. The system 10 is particularly well suited to clean a structure 11 having intricate interior surfaces such as, for example, a gas turbine bucket 11 having interior serpentine cooling ducts, such as the exemplar bucket shown in Figure 2. The system 10 is also suitable for use in impingement cooling. Impingement cooling holes are used to direct jets of coolant flow against a target surface to be cooled.

The cleaning system 10 includes a gas inlet duct 12 for transporting a gas through a gas compressor 13, a gas filter 14 to prevent airborne contaminants from entering the cleaning fluid mixture, and a gas heater 15 to a cleaning gas pressure vessel accumulator 16. For cost effectiveness, the gas employed may be ambient air in an open system. However, other more dense gases, such as carbon dioxide, may also be used in closed systems where the gas is recycled.

The system 10 further includes a control valve 17 used to regulate passage of gas to a mixing chamber 18. A bypass valve controller 19 is coupled to the valve 17. It may be programmed to regulate the pressure of gas through the system 10. The gas may be selectably mixed with liquid droplets, such as water droplets, that enter the mixing chamber 18 through water duct 20 and spray head 21. Other liquids beside water may also be employed, including high-boiling hydrocarbons in other liquids, such as water, as safety would dictate. A liquid flow controller 22 is coupled to a liquid control valve 23. The controller 22 may be programmed to regulate the volume of liquid droplets entering the mixing chamber 18. Flowmeters 24 and 25 are positioned as shown and are used to measure flow rates of the gas and liquid, respectively. Flowmeter 24 may be an orifice flowmeter and flowmeter 25 may be an orifice flowmeter or a rotameter.

The mass ratio of the liquid to the gas is important. Too little liquid limits the formation of rolling waves on the surfaces to be cleaned. In addition, insufficient liquid will minimize agitating liquid film formation as well as the ability to replenish the cleansing film. If there is too much liquid, the gas flow will drive slugs of fluid that causes local hammering that could mechanically damage bucket 11 or other cooling system containment components. For these reasons, flow rates of the gas and the liquid are to be monitored.

With continuing reference to Figure 1, the system 10 includes a cleaning tube 26 coupled to a manifold that delivers a gas/liquid droplet mixture 28 to inlet 27 of the bucket 11. The gas/liquid droplet mixture 28 is directed onto the interior surfaces 29 of the bucket 11, as shown in Figure 2. An outlet 30 of the bucket 11 delivers via a transport device such as a tube 31 a mixture 32 of cleaning fluid and accumulated particulate matter 50 out of the bucket 11.

Returning to Figure 1, the transport tube 31 is coupled to a heat exchanger 33. The heat exchanger 33 cools and condenses the fluid/particulate mixture 32 and thereby captures a liquid and particulate mixture 34 while venting cooled gas through outlet 35. The heat exchanger 33 is fitted with a demisting element 37 used to minimize carry over of remnant fog or mist to the atmosphere through outlet 35. The liquid and particulate are delivered by condensate pump 36 through a first condensate duct 38 and a second condensate duct 39 to a filter chamber 40 including a filter 41 for removal of particulate matter from the mixture 34. The quantity of particulate retained by the filter 41 is measured to assess the amount of particulate removed from the bucket 11. Filtered liquid 42 passing through removal duct 43 is then transferred to a rotameter 44. The rotameter 44 is used to measure the amount of liquid passing through the bucket 11 and to provide an indication of the amount of water droplets injected into the mixing chamber 18.

The system 10 described with respect to Figures 1 and 2 produces a sheeting action or film of liquid on all interior surfaces 29 of the bucket 11 (or any other structure to be cleaned). That sheeting action ensures that substantially all of the interior surfaces 29 are contacted with the cleaning solution of gas and liquid droplets. Contaminant particulates on those surfaces are therefore more likely to be dislodged and pass through the bucket 11. In effect, the velocity of the gas combined with the density of the liquid associated with the droplets creates a washing momentum. It is important that the liquid/gas mass ratio be controlled to be in a range where there is enough liquid to initiate weak rolling waves, but not so much as to allow slug flow to exist in the bucket 11. That is, the washing momentum must be sufficient to overcome the inertia of the particulates. It must do so without generating water hammer that may otherwise damage the bucket 11 or other parts.

The cleaning method associated with the use of the system 10 includes several steps. First, with the valve 17 closed and the condensate pump 37 turned off, the system 10 is connected to the bucket 11 at inlet 27 and outlet 30 using conventional tube or duct coupling connections. Ambient air or another suitable gas is drawn into compressor 13 and compressed to a selectable pressure defined by the particular requirements of the bucket 11 configuration. The compressed gas is then filtered and heated before being charged into the pressure vessel 16. The filtered and heated gas is pressurized to a pressure below that of the maximum pressure capability of the bucket 11 (or whatever structure is to be cleaned). The valve 17 is then opened and substantially simultaneously, the liquid control valve 23 is also opened. The controllers for valves 17 and 23 may be coupled together logically or they may be, in effect, a single controller regulating actuation of both valves. The mist or liquid droplets are preferably at a temperature about the same as that of the heated gas.

The droplets are injected through the spray head 21 in a blow-down arrangement in the mixing chamber 18. The mixture 28 is then transferred into the bucket 11 where it contacts the interior surfaces 29. The liquid droplets are introduced into the mixing chamber 18 either for the same or for less time than the gas is introduced into the mixing chamber 18. However, it is preferable to have the heated and filtered gas pass through the bucket 11 alone after a cleaning cycle so that it will purge liquid and dry the interior surfaces 29 having contact with the mixture 28. The mixture 32 including removed particulate is directed through the heat exchanger 33 where liquid vapor is condensed from the mixture 32 and gas is exhausted. The condensed liquid delivers particulate out of the heat exchanger 33. The pump 37 passes the liquid and particulate to the filter 41 where the particulate is collected for measurement and disposal.

The steps described above may be repeated by opening and closing the valve 18 and measuring the quantity of particulate trapped on the filter 41 and measuring the quantity of liquid accumulated with the rotameter 44. A reduction in the quantity of solids trapped provides an indication of the cleanliness within the structure 11. The volume of liquid droplets may be adjusted to provide sheeting on the interior surfaces 29 to wash particulate away.

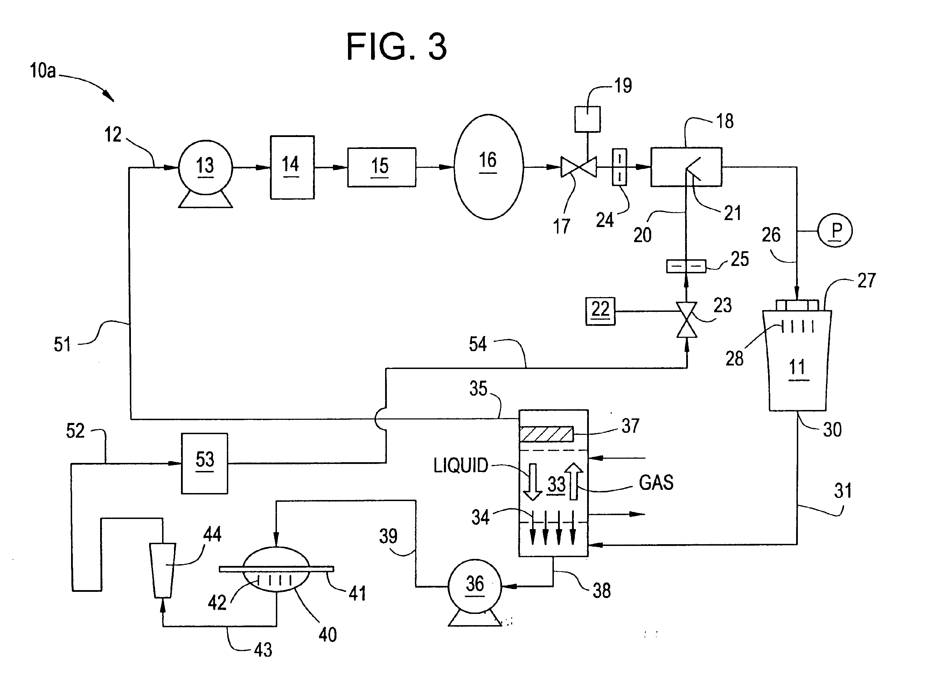

The system 10 described with respect to Figure 1 is an open system in that the spent gas from outlet 35 and the condensed liquid from rotameter 44 are not recycled. In an alternative embodiment of the invention shown in Figure 3, a closed misted cleaning system 100 includes essentially all of the components described with respect to the system 10 of Figure 1. Those like components are identified by like element numbers. Additionally, the closed system 100 includes a gas return duct 51 linked to the gas inlet 12 so that recovered gas may be reused. Appropriate valving may regulate the flow of return gas through duct 51 to inlet 12. Any gas relief valves are similarly coupled to the inlet 12 to ensure a closed system. The system 100 further includes a first liquid return duct 52 to transfer condensed liquid from the outlet of rotameter 44 to a liquid holding tank 53. A second liquid return 54 is coupled to liquid valve 23 to complete delivery of the liquid to the mixing chamber 18.

For the sake of good order, various aspects of the invention are set out in the following clauses: -
1. A method of cleaning a structure having interior surfaces, the method comprising the steps of:
   combining a cleaning gas and liquid droplets together to form a gas and liquid droplet mixture; and
   passing said gas and droplet mixture through the structure so as to provide a washing momentum of said mixture on the interior surfaces.
2. The method of clause 1 further comprising the step of:
   directing said mixture including particulate matter through a heat exchanger so as to condense said liquid droplets and the particulate matter from said gas.
3. The method of clause 2 further comprising the step of:
   directing said liquid droplets and the particulate matter through a filter to separate the particulate matter from the liquid associated with said liquid droplets.
4. The method of clause 3 further comprising the step of:
   directing the liquid to a rotameter for measurement of the quantity of liquid passing through the structure.
5. The method of clause 1 further comprising the step of filtering and heating said cleaning gas prior to combining it with said liquid droplets.
6. The method of clause 1 wherein said cleaning gas is ambient air and said liquid droplets are misted water droplets.
7. The method of clause 1 further comprising the step of repeating the steps of combining said cleaning gas and said liquid droplets to form a gas and liquid droplet mixture and directing said mixture through the structure.
8. The method of clause 1 further comprising the step of accumulating said cleaning gas in an accumulator prior to combining it with said liquid droplets.
9. The method of clause 1 further comprising the step of regulating the flows of said cleaning gas and said cleaning liquid into a mixture chamber for mixing said cleaning gas with said liquid droplets.
10. The method of clause 1 further comprising the step of controlling the flows of said cleaning gas and said cleaning liquid to just cause the onset of roll waves along the interior surfaces of the structure.
11. A system for cleaning a structure comprising:
   a cleaning gas accumulator for retaining a cleaning gas;
   a mixing chamber for combining said cleaning gas and liquid droplets; and
   a coupling to couple an outlet of said mixing chamber to the structure, wherein said coupling is designed to direct the combination of said cleaning gas and said liquid droplets to one or more surfaces of the structure to be cleaned in a sheeting manner.
12. The system of clause 11 further comprising a control valve coupling said accumulator to said mixing chamber.
13. The system of clause 12 further comprising a filter for receiving said cleaning gas and a heater coupled between said filter and said accumulator.
14. The system of clause 11 further comprising a heat exchanger for receiving the combination of said cleaning gas and said liquid droplets with particulate from the structure and condensing said liquid and the particulate from said cleaning gas.
15. The system of clause 14 further comprising a filter coupled to said heat exchanger for separating the particulate from said liquid.
16. The system of clause 15 further comprising a rotameter coupled to said filter for receiving and measuring a quantity of said liquid.
17. The system of clause 16 further comprising a gas return duct for returning gas from said heat exchanger to an inlet associated with said accumulator and a liquid return duct for returning liquid from said rotameter to a liquid inlet associated with said mixing chamber.
18. The system of clause 11 wherein said cleaning gas is ambient air and said liquid is water.
19. The system of clause 11 wherein the structure is a gas turbine bucket.

## Claims

1. A method of cleaning a structure (10) having interior surfaces, the method comprising the steps of:
combining a cleaning gas and liquid droplets together to form a gas and liquid droplet mixture (28); and
passing said gas and droplet mixture (28) through the structure (10) so as to provide a washing momentum of said mixture on the interior surfaces.

2. The method of claim 1 further comprising the step of directing said mixture including particulate matter (32) through a heat exchanger (33) so as to condense said liquid droplets and the particulate matter from said gas.

3. The method of claim 2 further comprising the step of directing said liquid droplets and the particulate matter through a filter (41) to separate the particulate matter from the liquid associated with said liquid droplets.

4. The method of claim 3 further comprising the step of directing the liquid to a rotameter (44) for measurement of the quantity of liquid passing through the structure (11).

5. The method of claim 1 further comprising the step of controlling the flows of said cleaning gas and said cleaning liquid to just cause the onset of roll waves along the interior surfaces of the structure (11).

6. A system (10) for cleaning a structure (11) comprising:
a cleaning gas accumulator (16) for retaining a cleaning gas;
a mixing chamber (18) for combining said cleaning gas and liquid droplets; and
a coupling (26) to couple an outlet of said mixing chamber (18) to the structure (11), wherein said coupling (26) is designed to direct the combination of said cleaning gas and said liquid droplets to one or more surfaces of the structure (11) to be cleaned in a sheeting manner.

7. The system (10) of claim 6 further comprising a control valve (17) coupling said accumulator (16) to said mixing chamber (18).

8. The system (10) of claim 7 further comprising a filter (14) for receiving said cleaning gas and a heater (15) coupled between said filter (14) and said accumulator (16).

9. The system (10) of claim 6, 7 or 8 further comprising a heat exchanger (33) for receiving the combination of said cleaning gas and said liquid droplets with particulate from the structure (11) and condensing said liquid and the particulate from said cleaning gas.

10. The system (10) of any one of claims 6 to 9 wherein the structure (11) is a gas turbine bucket (11).
